# EUROPEAN PATENT SPECIFICATION

(11) **EP 2 243 250 B1**
(45) Date of publication and mention of the grant of the patent: **31.05.2017**
(21) Application number: 08872465.3
(22) Date of filing: 29.12.2008
(51) Int. Cl.: H04L 12/24

(54) **TARGETED QUERIES USING AN OMA DM PROTOCOL**
GEZIELTE ANFRAGEN ÜBER EIN OMA-DM-PROTOKOLL
REQUÊTES CIBLÉES À L'AIDE D'UN PROTOCOLE OMA DM

(30) Priority: 12.02.2008 US 29586
(43) Date of publication of application: 27.10.2010
(73) Proprietor: Microsoft Technology Licensing, LLC, Redmond, WA 98052 (US)
(72) Inventor: DANG, Hung M., Redmond, Washington 98052-6399 (US)
(74) Representative: Goddar, Heinz J.
(86) International application number: PCT/US2008/088463
(87) International publication number: WO 2009/102390

(56) References cited:
- US-A1- 2003 204 640
- US-A1- 2005 204 068
- US-A1- 2006 026 228
- US-A1- 2008 028 395
- SUMANTH CHANNABASAPPA ET AL: "Data Element Qualification by specifying a new node property ; OMA-DM-2007-0132-CR_Data_Element_Qualifica tion_by_specifying_a_new_node_property", OMA-DM-2007-0132-CR_DATA_ELEMENT_QUALIFICA TION_BY_SPECIFYING_A_NEW_NODE_PROPERTY, OPEN MOBILE ALLIANCE (OMA), 4330 LA JOLLA VILLAGE DR., SUITE 110 SAN DIEGO, CA 92122 ; USA , 5 October 2007 (2007-10-05), pages 1-8, XP064004919, Retrieved from the Internet: URL:ftp/Public_documents/DM/2007/ [retrieved on 2007-10-07]
- "OMA Device Management Tree and Description ; OMA-TS-DM_TND-V1_2-20070209-A", OMA-TS-DM_TND-V1_2-20070209-A, OPEN MOBILE ALLIANCE (OMA), 4330 LA JOLLA VILLAGE DR., SUITE 110 SAN DIEGO, CA 92122 ; USA , no. 1.2 9 February 2007 (2007-02-09), pages 1-47, XP064072102, Retrieved from the Internet: URL:ftp/Public_documents/DM/Permanent_docu ments/ [retrieved on 2007-02-23]

## Description

### BACKGROUND

In today's world of technology, a variety of mobile devices can be used by people on the go. Some examples of mobile devices include personal digital assistants (PDAs), wireless phones, PDA phones, laptops, vehicle devices, and embedded devices, to name a few examples. Some mobile devices are used for placing telephone calls, accessing personal information, sending text messages and emails, and sometimes even for connecting to corporate network applications remotely. In order for organizations to manage mobile devices, technologies related to device management were developed to provide customization, servicing, and personalization options. Device management techniques can be used to provision a mobile device or provide the necessary operating parameters to a mobile device. As the functionality offered by mobile devices continues to increase, so does the number of parameters and settings that need to be managed on the mobile devices.

Some device management techniques have been adopted as industry standards. For example, the Open Mobile Alliance (OMA) supports a device management (DM) standard that leverages the wireless application protocol (WAP) provisioning framework side-by-side with its own device management structures to provide devices with application access information and certain device information. For example, the OMA DM standard specifies that the capabilities of a device be represented as a tree of named nodes rooted at a node named ".". In an OMA DM management session, a server and a mobile device communicate via a standard protocol called the OMA DM protocol. During such a session, an OMA DM server sends down to a mobile device some commands in an extensible Markup Language (XML) format that queries or modifies the nodes, either in structure or in value.

The OMA DM protocol allows a server to query a target node on a mobile device for data. However, in the case of a target node that is the root of its own subtree, the data that is returned can contain all of the data for a target node as well as data for the entire sub-tree. When only a portion of information is desired, it can be inefficient to get to the desired data. For example, one approach that can be taken to get to the desired data is for the server to make multiple iterations of sending a query to the device, getting a response and parsing the response, etc. This can be slow and inefficient due to the processing of extra data that is not needed and also due to the bandwidth and time expended from extra round trips to retrieve the data. Another approach that can be taken is for the server to query an entire sub-tree where the desired node resides. This too can result in the processing of data that is not needed and in the expending of extra system resources, since the entire sub-tree is returned, even if the server only needs a few pieces of data in that sub-tree. Sumanth Channabrasappa et al. disclose in an OMA change request titled " Data Element Qualification by specifying a new node property" a Get command to retrieve management tree information identified by an attribute in the URI. It further discloses filtering the reported notes and specifying a user or an application associated with the reported notes, such as in the table depicted on said page.

"OMA Device Management Tree and Description" discloses OMA DM nodes, including node properties and note values.

US 2008/028395 discloses remote-accessible configuration parameters in SQL.

### SUMMARY

The invention is defined as a computer-readable medium according to independent claim 1 and as a method according to independent claim 3. Preferred embodiments thereof are defined in the respective dependent claims.

Various technologies and techniques are disclosed for extending the functionality of the Open Mobile Alliance (OMA) Device Management (DM) protocol. An addition is made to the OMA DM protocol that enables the server to specify node filtering criteria as part of a query to a target node on a mobile device to indicate a sub-set of the device management data for the target node that should be returned. The server sends the query to the mobile device. When the request is successfully processed on the mobile device, a response is received from the mobile device that includes only the sub-set of device management data that meets the node filtering criteria.

A modification is made to the OMA DM protocol that enables the server to specify what attributes should be selected on the mobile device in one parameter of a target URI of the Get command, and what format the device management data should be returned in as another parameter of the target URI of the Get command.

This Summary was provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Figure 1 is a diagrammatic view of an OMA DM structure of one implementation.
Figure 2 is a diagrammatic view of some exemplary source code for specifying node filtering criteria in multiple places of a Get command using a SQL syntax.
Figure 3 is a diagrammatic view of some exemplary source code for specifying node filtering criteria in a node filter parameter of an OMA DM query using a SQL query syntax.
Figure 4 is a diagrammatic view of some exemplary source code for specifying node filtering criteria in a node filter parameter and in a separate data parameter of an OMA DM query using an Xpath query syntax.
Figure 5 is a process flow diagram for one implementation illustrating the stages involved in sending a request having node filtering criteria to a mobile device using an OMA DM protocol.
Figure 6 is a diagrammatic view of some exemplary source code for specifying one parameter that indicates what attributes should be selected and another parameter that indicates what format the device management data should be returned in.
Figure 7 is a diagrammatic view of a computer system of one implementation.

### DETAILED DESCRIPTION

The technologies and techniques herein may be described in the general context as extensions and/or modifications to the Open Mobile Alliance (OMA) Device Management (DM) protocol, but the technologies and techniques also serve other purposes in addition to these.

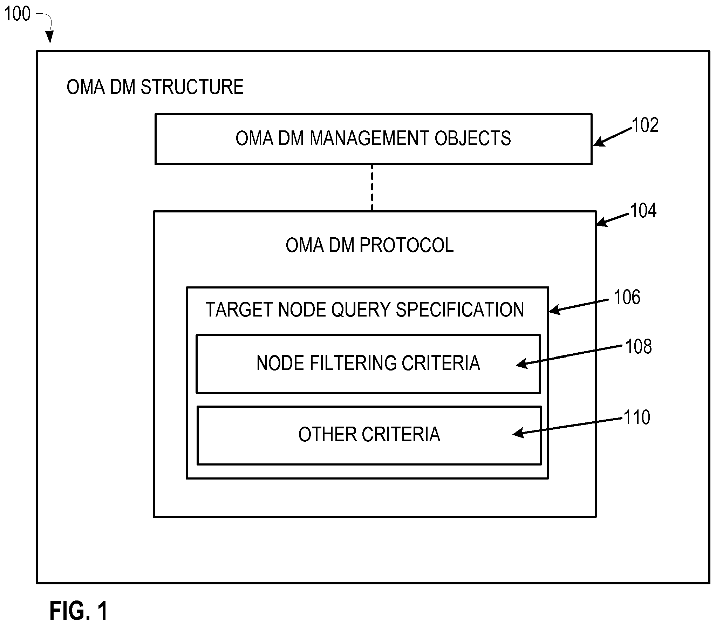

As mentioned previously, the OMA DM standard leverages the wireless application protocol (WAP) provisioning framework side-by-side with its own device management structures to provide devices with application access information and certain device information. These device management structures are shown in the OMA DM structure 100 of Figure 1 as OMA DM management objects 102. The OMA DM standard specifies that the capabilities of a mobile device be represented as a tree of named nodes rooted at a node named ".". An example of this structure is provided shortly. In an OMA DM management session, a server and a mobile device communicate via a standard protocol called the OMA DM protocol. During such a session, an OMA DM server sends down to a mobile device some commands in an extensible Markup Language (XML) format that queries or modifies the nodes, either in structure or in value. The OMA DM protocol allows a server to query a target node on a mobile device for data. The term "target node" as used herein is meant to refer to a node in the device's OMA DM management tree that is the object of a particular OMA DM server command (such as a Get command). A target node can include zero or more child nodes.

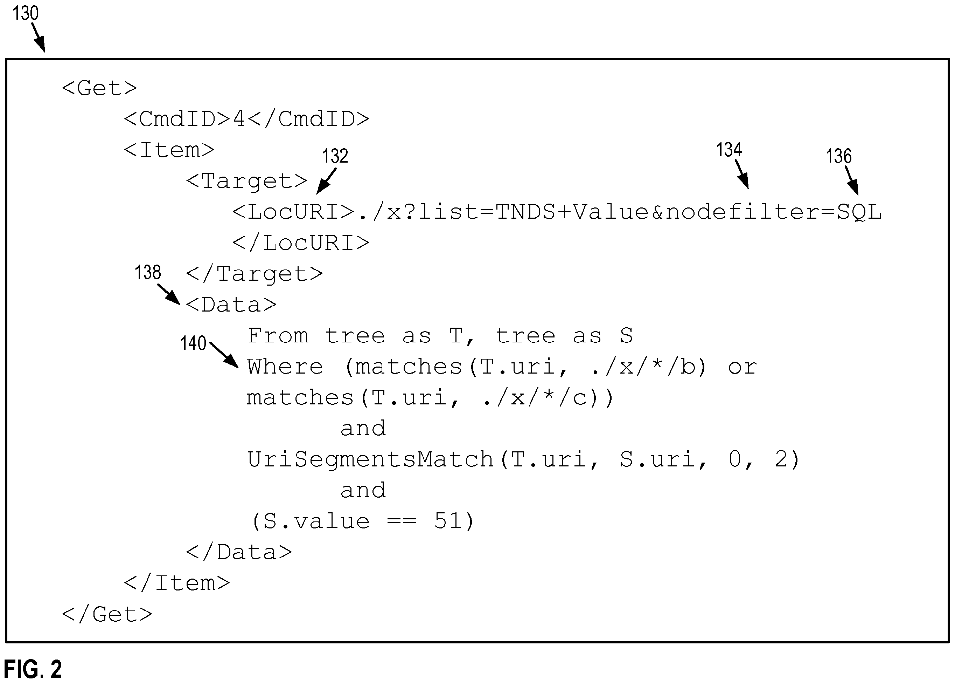

As shown in Figure 1, in one implementation, an extension is made to the OMA DM protocol 104 to add one or more node filtering criteria 108 to the target node query specification 106. The node filtering criteria 108 allow the server to specify a sub-set of device management data should be returned from the mobile device. The term "node filtering criteria" as used herein is meant to include one or more parameters, criteria or other values that specify how device management data should be filtered. As described in further detail in Figures 2-5 herein, in one implementation, at least a portion of the node filtering criteria is included in a new parameter added to a target URI included in the Get command. Other implementations are also described in further detail.

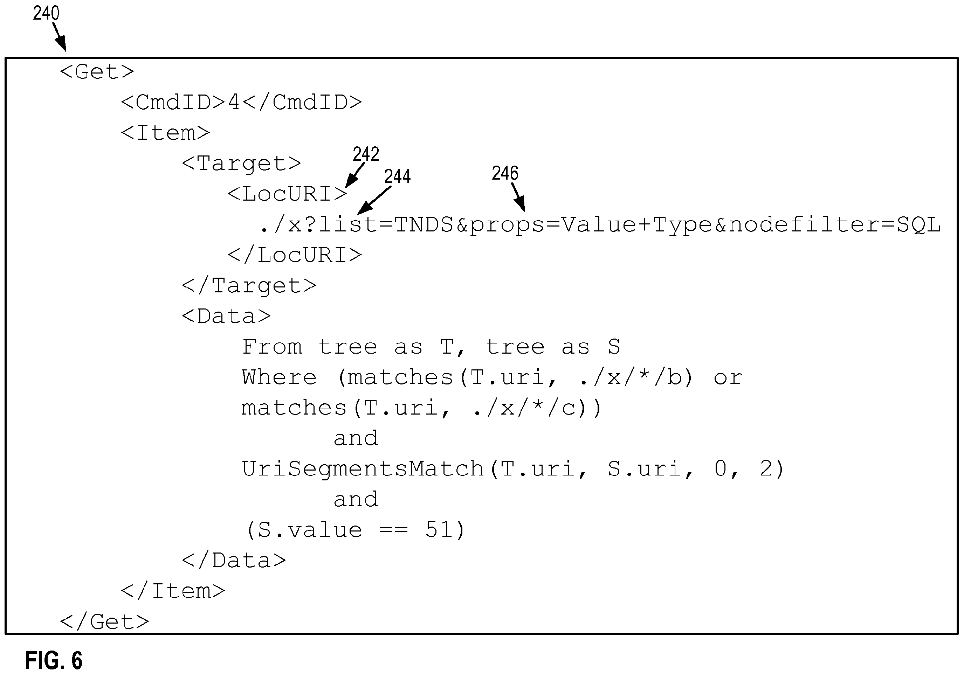

Alternatively or additional to node filtering criteria 108, other criteria 110 can also be modified and/or included in the OMA DM protocol 104. As one non-limiting example, a modification can be made to the OMA DM protocol such that one parameter is used to indicate what attributes should be selected on the mobile device and another parameter is used to indicate what format the device management data should be returned in. This non-limiting example is described in further detail in Figure 6. Some examples will now be provided in Figures 2-6 to further illustrate the node filtering criteria and other concepts.

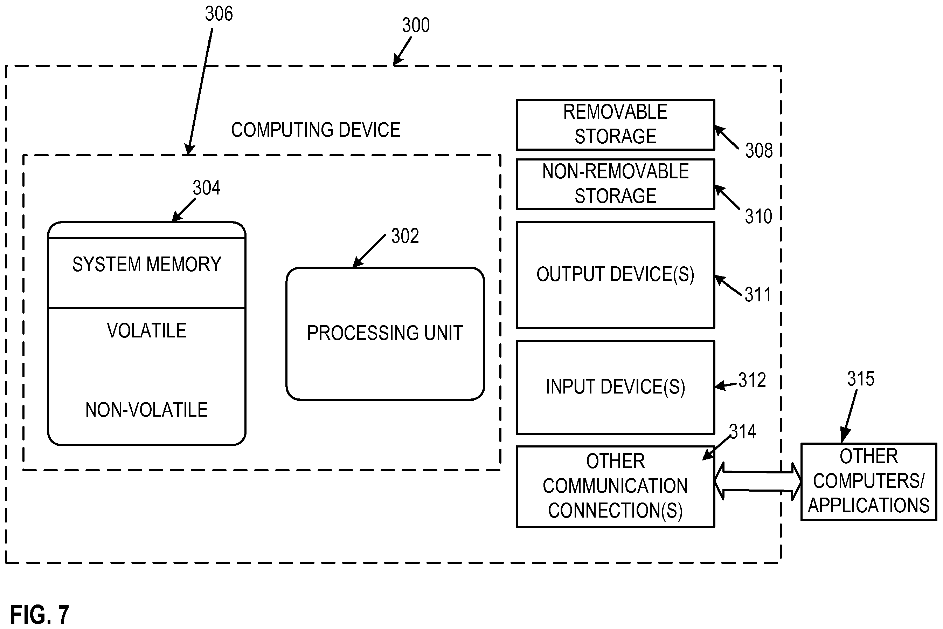

Turning now to Figures 2-6, some exemplary source code and processes for implementing one or more implementations of an OMA DM protocol 104 are described in further detail. In some implementations, the processes described in the discussions of Figure 2-6 are at least partially implemented in the operating logic of computing device 300 (of Figure 7).

Figure 2 is a diagrammatic view 130 of some exemplary source code for specifying node filtering criteria in multiple places in a Get command using a SQL syntax. Before discussing the details of the syntax of the exemplary source code shown in Figure 2, an example will first be described to further illustrate the concept of node filtering.

Suppose that only a portion of device management data is needed by the server to perform some device management operation. Below is a hypothetical example of a tree of data that could be present on a mobile device:

```
.
         x
            y
              b (value = 1)
              c (value = 2)
              d
                  e (value = 51)
            y2
              b (value = 3)
              c (value = 4)
              d
                  e (value = 28)
            y3
              b (value = 5)
              c (value = 6)
              d
                  e (value = 51)
```

Suppose the server only wants to retrieve the values of all nodes {./x/y/b, ./x/y/c} where the corresponding ./x/y/d/e.value == 51. A query such as the one shown in Figure 2 could be issued from the server to the mobile device, which will be described in further detail momentarily. After processing the results on the mobile device, the server would then receive results back that are similar to the following:
./x/y/b (value = 1)
./x/y/c (value = 2)
./x/y3/b (value = 5)
./x/y3/c (value = 6)

Note that the above list of results is a simplified view of what the server would actually receive, and is presented in a simplified form for the sake of illustration. The actual results could be returned in an XML or other format, such as a format specified by the server or the client. Below is an example of what the results could look like in an XML format.

```
<MgmtTree xmlns="syncml:dmddf1.2">
      <VerDTD>1.2</VerDTD>
      <Node>
        <NodeName>b</NodeName>
        <Path>./x/y</Path>
        <RTProperties>
           <Value>1</Value>
        </RTProperties>
      </Node>
      <Node>
        <NodeName>c</NodeName>
        <Path>./x/y</Path>
        <RTProperties>
           <Value>2</Value>
        </RTProperties>
      </Node>
      <Node>
        <NodeName>b</NodeName>
        <Path>./x/y3</Path>
        <RTProperties>
           <Value>5</Value>
        </RTProperties>
      </Node>
      <Node>
        <NodeName>c</NodeName>
        <Path>./x/y3</Path>
        <RTProperties>
           <Value>6</Value>
        </RTProperties>
      </Node>
   </MgmtTree>
```

In both of the above examples, the nodes that were returned include just the desired fields where the specified node filtering criteria was met. In this hypothetical example, the filtering criteria included the requirement that certain portions of data only be returned for nodes having an "e" node with a value equal to 51. The results included the selected fields of data for the nodes that met that specified criteria.

Returning now to the source code example of Figure 2, one way of implementing the node filtering criteria using the OMA DM protocol is to add a node filter criteria to the Get command. The Get command is supported in the OMA DM protocol for enabling the server to get device management data from the mobile device. In the example source code shown in Figure 2, the LocURI parameter 132 of the Get command has been modified to include a node filter parameter 134 which specifies the query language 136 that is being used to express the node filtering criteria. In this example, the actual node filtering criteria is then actually expressed elsewhere in the Get command, such as in a data section 138, using the query language syntax that was specified in the node filter parameter 134. In this example, the node filter parameter 134 specifies that the query language syntax 136 being used is SQL. A SQL query 140 is then included in the data section 138. The SQL query contains the same criteria that was used in the earlier example that limited the records to the "b" and "c" records for the nodes that have values that equal 51.

The example shown in Figure 2 is just one example of many possible ways that the OMA DM protocol can be modified to include a node filtering criteria. For example, in other implementations, the specific node filtering criteria can just be included directly within the LocURI parameter 132, in some other section of the Get command, or in some external location accessible to the Get command.

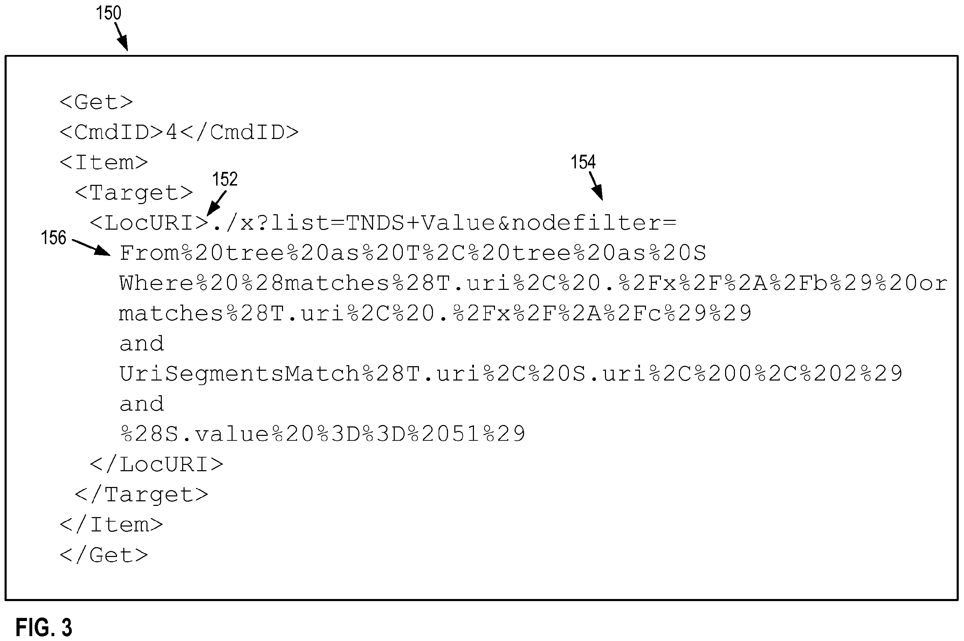

Figure 3 is a variation of Figure 2 that illustrates how the same SQL node filtering criteria 156 could alternatively be included directly within the LocURI parameter 152 as part of a node filter parameter 154. In other words, the actual query statement that indicates the criteria that should be used to select the sub-set of device management data can be embedded directly within the LocURI parameter 152, as another possible variation.

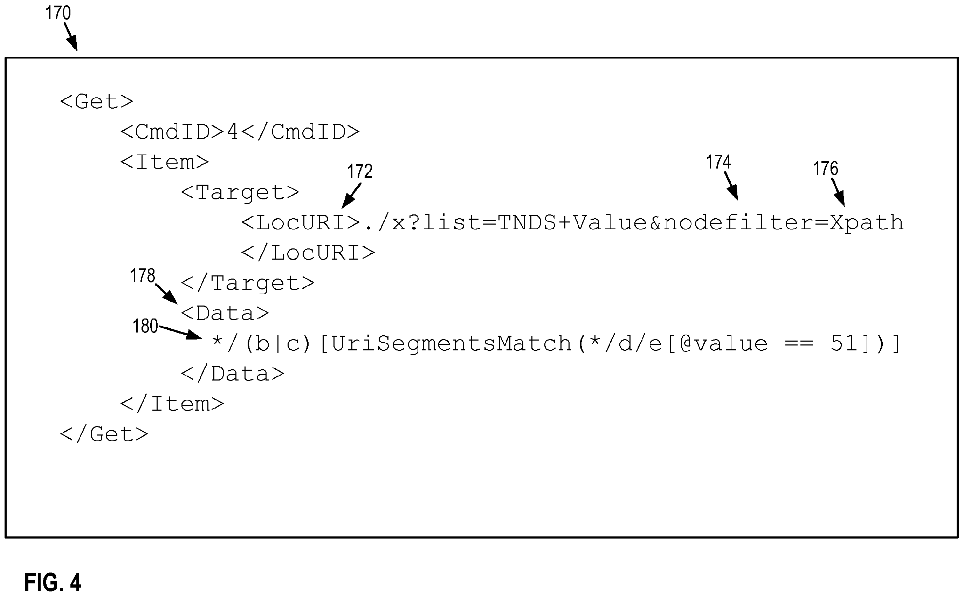

Figure 4 is a diagrammatic view 170 of some exemplary source code for specifying node filtering criteria in a node filter parameter and in a separate data parameter of an OMA DM query using an Xpath query syntax. The example source code of Figure 4 shows a variation of Figure 2 where an Xpath query syntax is used for the hypothetical query instead of a SQL syntax. In this example, the LocURI parameter 172 of the Get command contains a node filter parameter 174 that indicates a value of Xpath for the query language syntax 176. The data section 178 of the Get command then includes the query with the actual node filtering criteria in an Xpath query language syntax. The criteria specified in the Xpath syntax is the same filtering criteria introduced earlier, but instead using an Xpath syntax to illustrate. While the query is shown in the data section in examples of Figure 2 and 4, and directly within the LocURI parameter in Figure 3, it will be appreciated that the query for expressing the node filtering criteria can be specified in any one of numerous manners as would occur to one in the computer software art. Any suitable variation for representing node filtering criteria directly within or accessible to a Get command of the OMA DM protocol could be used in other implementations.

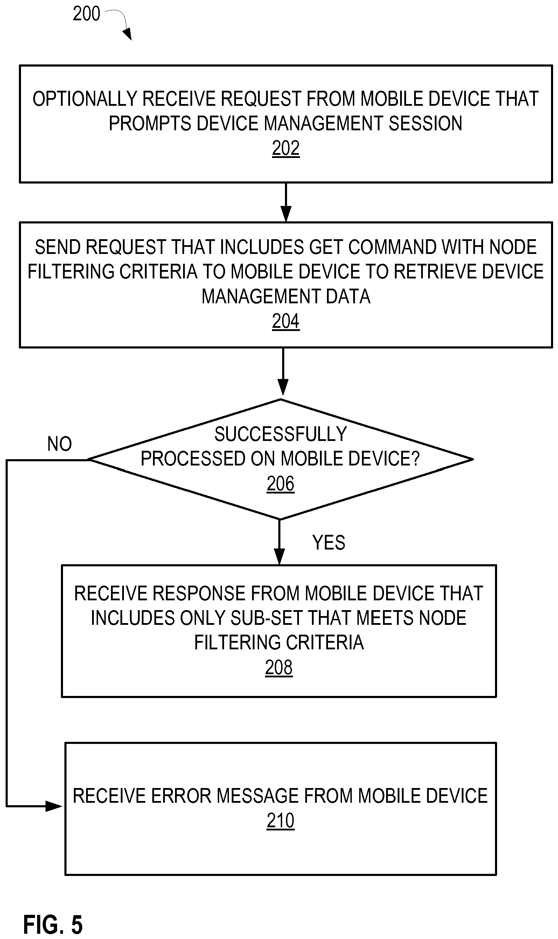

Turning now to Figure 5, a process flow diagram 200 for one implementation is shown that illustrates the stages involved in sending a request having node filtering criteria to a mobile device using an OMA DM protocol. A request is optionally received from a mobile device that prompts the server to initiate a device management session (stage 202). As one non-limiting example, the mobile device could establish a connection with the server (over HTTP or other protocols) and request updates. In any event, the server somehow determines that it is time to communicate with the mobile device to retrieve and/or update device management data. The server sends a request to the mobile device that includes a Get command with node filtering criteria to retrieve device management data (stage 204).

If the request is successfully processed on the mobile device (decision point 206), then the server receives a response from the mobile device that includes only the sub-set of device management data that meets the node filtering criteria (stage 208), as opposed to other nodes that do not meet the node filtering criteria. In some implementations, the server can receive status indicators or other ancillary information along with the specific requested data that meets the node filtering criteria. In such scenarios, the server would not receive nodes of data within the tree that were specifically asked to be filtered out in the node filtering criteria. In the event that the request is not successfully processed on the mobile device (decision point 206), then the server receives an error from the mobile device, where applicable (stage 210). If the error arises due to a communication error between the server and the mobile device, for example, then it may not be possible to receive an error code since the communication connection was lost.

Turning now to Figure 6, another modification to the OMA DM protocol is described to illustrate how attribute selection can be included in a separate parameter from the data format selection and node set selection in the LocURI parameter of the Get command. Exemplary source code 240 has a LocURI parameter 242 with a list parameter 244 that describes the format that the device management data should be returned in. In one implementation, if the list value is "StructData" then all nodes are returned in individual Items in the results, with a static set of per-node data. If the value for list parameter 244 is "TNDS", an XML blob is returned, describing the set of per-node data for all nodes; this attribute selection is customizable, but the customization is embedded in the TNDS list value itself. The props parameter 246, however, disentangles attribute selection from other parts of the querying syntax, such as node set selection and data format selection, and so props parameter 246 can be specified in conjunction with any other facility for specifying node set selection or data format selection. This props parameter 246 itself indicates what attributes should be selected from the mobile device's targeted node set. The attributes specified in the props parameter 246 can include node properties, as well as node values, and multiple attributes can be specified at one time. Note that these parameters could be named differently than described in Figure 6, but are just one example.

As shown in Figure 7, an exemplary computer system to use for implementing one or more parts of the system includes a computing device, such as computing device 300. In its most basic configuration, computing device 300 typically includes at least one processing unit 302 and memory 304. Depending on the exact configuration and type of computing device, memory 304 may be volatile (such as RAM), non-volatile (such as ROM, flash memory, etc.) or some combination of the two. This most basic configuration is illustrated in Figure 7 by dashed line 306.

Additionally, device 300 may also have additional features/functionality. For example, device 300 may also include additional storage (removable and/or non-removable) including, but not limited to, magnetic or optical disks or tape. Such additional storage is illustrated in Figure 7 by removable storage 308 and non-removable storage 310. Computer storage media includes volatile and nonvolatile, removable and non-removable media implemented in any method or technology for storage of information such as computer readable instructions, data structures, program modules or other data. Memory 304, removable storage 308 and non-removable storage 310 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by device 300. Any such computer storage media may be part of device 300.

Computing device 300 includes one or more communication connections 314 that allow computing device 300 to communicate with other computers/applications 315. Device 300 may also have input device(s) 312 such as keyboard, mouse, pen, voice input device, touch input device, etc. Output device(s) 311 such as a display, speakers, printer, etc. may also be included. These devices are well known in the art and need not be discussed at length here.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. All equivalents, changes, and modifications that come within the spirit of the implementations as described herein and/or by the following claims are desired to be protected.

For example, a person of ordinary skill in the computer software art will recognize that the examples discussed herein could be organized differently on one or more computers to include fewer or additional options or features than as portrayed in the examples.

## Claims

1. A computer-readable medium having computer-executable components comprising:
an Open Mobile Alliance Device Management, OMA DM, structure (100) that includes standard OMA DM management objects (102) associated with an OMA DM protocol (104) for managing device management data on a mobile device, the OMA DM protocol (104) enabling a server to submit a Get command to a target node on the mobile device to retrieve device management data associated with the target node; and
an addition to the OMA DM protocol (104) that enables the server to specify a node filtering criteria (108, 156) as part of the Get command to indicate a sub-set of the device Management data for the target node that should be returned;
wherein a data section of the Get command contains an actual query statement that indicates the criteria that should be used to select the sub-set of device management data; and
wherein the data section of the Get command is written in a language syntax specified in a new parameter within a target URI of the Get command, in particular wherein the target URI of the Get command also contains one parameter that indicates what attributes should be selected on the mobile device and another parameter that indicates what format the device management data should be returned in, wherein said attributes include node properties and node values.

2. The computer-readable medium of claim 1, wherein the Get command is specified in an XML syntax in particular wherein the node filtering criteria is specified in a LocURI field (172, 132, 152) in the XML syntax.

3. A method for retrieving sub-sets of data for a target node using the OMA DM protocol (104) comprising the steps of:
sending a request to a mobile device to retrieve device management data using an Open Mobile Alliance Device Management, OMA DM, protocol (104), the request including a Get command with node filtering criteria, the node filtering criteria (108, 156) indicating a sub-set of device management data that should be returned for a target node; and
when the request is successfully processed on the mobile device, receiving a response from the mobile device that includes only the sub-set of device management data that meets the node filtering criteria (108, 156);
wherein at least a portion of the node filtering criteria (108, 156) is contained as a parameter within a target URI that is part of the Get command; and
wherein the target URI has one parameter that indicates what attributes should be selected on the mobile device and another parameter that indicates what format the device management data should be returned in, wherein said attributes include node properties and node values.

4. The method of claim 3, further comprising the steps of: when the request was attempted on the mobile device but was not successfully processed on the mobile device, receiving an error message from the mobile device that describes an error that occurred on the mobile device or further comprising the steps of: prior to the sending the request step, receiving a communication request from the mobile device that prompts the request for the device management data to be sent to the mobile device.

5. The method of claim 3, wherein the parameter within the target URI specifies a language syntax to be used for the filtering criteria (108, 156).

6. The method of claim 3, wherein an actual query specifying the node filtering criteria (108, 156) is included in a separate section of the Get command, the actual query being written in the language syntax specified within the parameter in the target URL.

7. The method of claim 3, wherein the separate section is a data section of the Get command.

## Patentansprüche

1. Computerlesbares Medium, das computerausführbare Komponenten aufweist, umfassend:
eine Open Mobile Alliance Device Management, OMA-DM, Struktur (100), die standardgemäße OMA-DM-Verwaltungsobjekte (102) enthält, die mit einem OMA-DM-Protokoll (104) zum Verwalten von der Geräteverwaltungsdaten auf einem Mobilgerät assoziiert sind, wobei das OMA-DM-Protokoll (104) einen Server in die Lage versetzt, einen Get-Befehl an einen Zielknoten auf dem Mobilgerät zu senden, um Geräteverwaltungsdaten einzuholen, die mit dem Zielknoten assoziiert sind;
und
eine Erweiterung des OMA-DM-Protokolls (104), die den Server in die Lage versetzt, ein Knotenfilterkriterium (108,156) als Teil des Get-Befehls anzugeben, um eine Teilmenge der Geräteverwaltungsdaten für den Zielknoten anzuzeigen, die zurückgeliefert werden sollen;
wobei ein Datenabschnitt des Get-Befehls eine eigentliche Anforderungsaussage enthält, die die Kriterien anzeigt, die verwendet werden sollen, um die Teilmenge der Geräteverwaltungsdaten auszuwählen; und
wobei der Datenabschnitt des Get-Befehls in einer Spachsyntax geschrieben ist, die in einem neuen Parameter innerhalb einer Ziel-URI des Get-Befehls angegeben ist, insbesondere wobei die Ziel-URI des Get-Befehls außerdem einen Parameter, der anzeigt, welche Attribute auf dem Mobilgerät ausgewählt werden sollen, und einen weiteren Parameter enthält, der angibt, in welchem Format die Geräteverwaltungsdaten zurückgeliefert werden sollen, wobei die Attribute Knoteneigenschaften und Knotenwerte enthalten.

2. Computerlesbares Medium nach Anspruch 1, wobei der Get-Befehl in einer XML-Syntax angegeben ist, insbesondere wobei das Knotenfilterkriterium in einem LocURI-Feld (172,132,152) in XML-Syntax angegeben ist.

3. Verfahren zum Einholen von Teilmengen von Daten für einen Zielknoten unter Verwendung des OMA-DM-Protokolls (104), umfassend die Schritte:
Senden einer Anforderung an ein Mobilgerät zum Einholen von Geräteverwaltungsdaten unter Verwendung eines Open Mobile Alliance Device Management, OMA DM, Protokolls (104), wobei die Anforderung einen Get-Befehl mit Knotenfilterkriterien enthält, wobei die Knotenfilterkriterien (108,156) eine Teilmenge von Geräteverwaltungsdaten anzeigen, die für einen Zielknoten zurückgeliefert werden sollen; und
nach erfolgreichem Verarbeiten der Anforderung auf dem Mobilgerät, Empfangen einer Antwort von dem Mobilgerät, die lediglich die Teilmenge der Geräteverwaltungsdaten enthält, die die Knotenfilterkriterien (108, 56) erfüllen;
wobei wenigstens ein Teil der Knotenfilterkriterien (108, 56) als ein Parameter innerhalb einer Ziel-URI enthalten ist, die Teil des Get-Befehls ist; und
wobei die Ziel-URI einen Parameter, der anzeigt, welche Attribute auf dem Mobilgerät ausgewählt werden sollen, und einen weiteren Parameter aufweist, der anzeigt, in welchem Format die Geräteverwaltungsdaten zurückgeliefert werden sollen, wobei die Attribute Knoteneigenschaften und Knotenwerte enthalten.

4. Verfahren nach Anspruch 3, ferner umfassend die Schritte: nachdem die Anforderung auf dem Mobilgerät versucht wurde, jedoch nicht erfolgreich auf dem Mobilgerät verarbeitet werden konnte, Empfangen einer Fehlernachricht von dem Mobilgerät, die einen Fehler beschreibt, der auf dem Mobilgerät aufgetreten ist, oder ferner umfassend die Schritte: vor dem Senden der Anforderung, Empfangen einer Kommunikationsanforderung von dem Mobilgerät, die die Anforderung der Geräteverwaltungsdaten veranlasst, an das Mobilgerät gesendet zu werden.

5. Verfahren nach Anspruch 3, wobei der Parameter innerhalb der Ziel-URI eine Sprachsyntax angibt, die für die Filterkriterien (108,156) verwendet werden soll.

6. Verfahren nach Anspruch 3, wobei eine eigentliche Anforderung, die die Knotenfilterkriterien (108,156) angibt, in einem separaten Abschnitt des Get-Befehls enthalten ist, wobei die eigentliche Anforderung in der Sprachsyntax geschrieben ist, die innerhalb des Parameters in der Ziel-URI angegeben ist.

7. Verfahren nach Anspruch 3, wobei der separate Abschnitt ein Datenabschnitt des Get-Befehls ist.

## Revendications

1. Support lisible par ordinateur présentant des composants exécutables par ordinateur, comprenant :
une structure de gestion de dispositifs d'alliance mobile ouverte, OMA DM, (100) qui inclut des objets de gestion OMA DM standard (102) associés à un protocole de gestion OMA DM (104) destiné à gérer des données de gestion de dispositif sur un dispositif mobile, le protocole de gestion OMA DM (104) permettant à un serveur de présenter une commande d'obtention, « Get », à un noeud cible sur le dispositif mobile, en vue de récupérer des données de gestion de dispositif associées au noeud cible ; et
un ajout au protocole de gestion OMA DM (104) qui permet au serveur de spécifier un critère de filtrage de noeud (108, 156), dans le cadre de la commande d'obtention, en vue d'indiquer un sous-ensemble des données de gestion de dispositif, pour le noeud cible, à retourner ;
dans lequel une section de données de la commande d'obtention contient une instruction de requête effective qui indique le critère qui doit être utilisé en vue de sélectionner le sous-ensemble de données de gestion de dispositif ; et
dans lequel, la section de données de la commande d'obtention est écrite dans une syntaxe de langage spécifiée dans un nouveau paramètre au sein d'un identifiant URI cible de la commande d'obtention, en particulier dans lequel l'identifiant URI cible de la commande d'obtention contient également un paramètre qui indique quels attributs doivent être sélectionnés sur le dispositif mobile, et un autre paramètre qui indique dans quel format les données de gestion de dispositif doivent être retournées, dans lequel lesdits attributs incluent des propriétés de noeud et des valeurs de noeud.

2. Support lisible par ordinateur selon la revendication 1, dans lequel la commande d'obtention est spécifiée dans une syntaxe XML, en particulier dans lequel le critère de filtrage de noeud est spécifié dans un champ « LocURI » (172, 132, 152) dans la syntaxe XML.

3. Procédé de récupération de sous-ensembles de données pour un noeud cible faisant appel au protocole de gestion OMA DM (104), comprenant les étapes ci-dessous consistant à :
envoyer une demande à un dispositif mobile, visant à récupérer des données de gestion de dispositif en faisant appel à un protocole de gestion de dispositifs d'alliance mobile ouverte, OMA DM, (104), la demande incluant une commande d'obtention, « Get », avec un critère de filtrage de noeud, le critère de filtrage de noeud (108, 156) indiquant un sous-ensemble des données de gestion de dispositif à retourner pour un noeud cible ; et
lorsque la demande est correctement traitée sur le dispositif mobile, recevoir une réponse en provenance du dispositif mobile, laquelle inclut uniquement le sous-ensemble de données de gestion de dispositif satisfaisant le critère de filtrage de noeud (108, 156) ;
dans lequel au moins une partie du critère de filtrage de noeud (108, 156) est incluse sous la forme d'un paramètre au sein d'un identifiant URI cible qui fait partie de la commande d'obtention ; et
dans lequel l'identifiant URI cible présente un paramètre qui indique quels attributs doivent être sélectionnés sur le dispositif mobile et un autre paramètre qui indique dans quel format les données de gestion de dispositif doivent être retournées, dans lequel lesdits attributs incluent des propriétés de noeud et des valeurs de noeud.

4. Procédé selon la revendication 3, comprenant en outre les étapes ci-après consistant à :
lorsque la demande a été tentée sur le dispositif mobile, alors qu'elle n'a pas été traitée correctement sur le dispositif mobile, recevoir un message d'erreur, en provenance du dispositif mobile, qui décrit une erreur survenue sur le dispositif mobile, ou comprenant en outre les étapes ci-après consistant à : avant l'étape d'envoi de la demande, recevoir une demande de communication, en provenance du dispositif mobile, qui ordonne que la demande concernant les données de gestion de dispositif soit envoyée au dispositif mobile.

5. Procédé selon la revendication 3, dans lequel le paramètre dans l'identifiant URI cible spécifie une syntaxe de langage à utiliser pour le critère de filtrage (108, 156).

6. Procédé selon la revendication 3, dans lequel une requête effective spécifiant le critère de filtrage de noeud (108, 156) est incluse dans une section distincte de la commande d'obtention, la requête effective étant écrite dans la syntaxe de langage spécifiée dans le paramètre au sein de l'identifiant URI cible.

7. Procédé selon la revendication 3, dans lequel la section distincte est une section de données de la commande d'obtention.
